# EUROPÄISCHE PATENTANMELDUNG

(11) **EP 1 306 649 A1**
(43) Veröffentlichungstag der Anmeldung: **02.05.2003**
(21) Anmeldenummer: 01440399.2
(22) Anmeldetag: 23.11.2001
(51) Int. Cl.: G01D 5/22

(54) **Induktive Sensoranordnung zur Erfassung einer Dreh- oder Translationsposition**

(30) Priorität: 24.10.2001 EP 01440357
(71) Anmelder: Senstronic (Société Anonyme), 67700 Saverne (FR)
(72) Erfinder: Schmidt, Ralf, 67251 Freinsheim (DE)
(74) Vertreter: Nuss, Pierre

(57) **Zusammenfassung**

Die Erfindung betrifft eine induktive Sensoranordnung die dadurch gekennzeichnet ist dass sie aus wenigstens einem Spulensystem besteht, welches, zum einen, eine oder mehrere Primärespule(n) (Lpi), wobei jede Primärspule (Lpi) Teil eines Schwingkreises ist und ein elektromagnetisches Feld erzeugt und, zum anderen, mindestens ein Satz von n Sekundärspulen (Lsj), mit n ≥ 2, die jede eine Längen - bzw. Winkelausdehnung (sj) besitzt, und in denen unter dem elektromagnetischen Einfluss der Primärspule(n) (Lpi) unterschiedliche Spannungen und Ströme induziert werden, beinhaltet und dadurch gekennzeichnet dass ein beeinflussendes Element (BE), über mindestens einem Bewegungsbereich (Δs) mindestens zwei Sekundärspulen (Lsj) in erfassbarer Weise elektromagnetisch beeinflusst und dass sich diese Beeinflussungen der betroffenen Sekundärspulen durch die Verschiebung des beeinflussenden Elements (BE) verändern, wobei ebenfalls Mittel (M) vorgesehen sind die diese Veränderungen oder Differenzen der Beeinflussungen auswerten.

## Beschreibung

Die vorliegende Erfindung betrifft das Gebiet der Abtastung und der Erfassung der Position und gegebenenfalls der Bewegung eines elektromagnetische Felder beeinflussenden Gegenstandes, insb. im Zusammenhang mit Klemmgreifern und Kraftspannern, und hat zum Gegenstand eine induktive Sensoranordnung zur Erfassung der Rotationsoder Translationsposition bzw -bewegung eines beweglichen Teils oder Organs.

Es sind schon mehrere solcher induktiven Sensoranordnungen mit Ozillatoren bekannt.

In diesen bekannten Anordnungen sind lange und störende Kabelverbindungen vorhanden zwischen der Elektronik im Grundgehäuse und den Sensorsatelliten, welche die ozillierenden Schwingkreise enthalten.

Alternativ hierzu sind auch Anordnungen bekannt die ein Doppelsensor in einem Gehäuse aufweisen, in welchem zwei Spulensysteme in einem festen Abstand zueinander angeordnet sind.

In diesem Falle wird das Gehäuse fest in die Applikation integriert.

Jedoch weisen diese bekannten Anordnungen mehrere Nachteile und Einschränkungen auf, darunter das Vorhandensein einer Kabelverbindung, die Notwendigkeit einer Justierung bzw einer Anpassung der Anordnung für jede Anwendung (welche vom Einsteller abhängig ist), die nötige mechanische Aufwendigkeit um eine gewisse Verschiebbarkeit der Sensoranordnung zu erreichen und die Abwesenheit einer automatischen Erkennung des Hubs, sowie das Fehlen von Zwischenwerten.

Aufgabe der Erfindung ist es somit eine induktive Sensoranordnung zu beschaffen, welche es erlaubt mindestens einige der vorgenannten Nachteile und Einschränkungen des Standes der Technik zu beheben.

Zu diesem Zwecke betrifft die Erfindung eine induktive Sensoranordnung zur Erfassung der Dreh- oder Translationsposition bzw. - bewegung eines beweglichen Teils oder Organs welches ein elektomagnetische Felder beeinflussendes Element aufweist oder mit einem solchen Element starr verbunden ist, dadurch gekennzeichnet dass dieser Sensor im wesentlichen aus wenigstens einem Spulensystem besteht, welches, zum einen, eine oder mehrere Primärespule(n) mit einer Längenoder Winkelausdehnung, wobei jede Primärspule Teil eines Schwingkreises ist und ein elektromagnetisches Feld erzeugt und, zum anderen, mindestens ein Satz von n Sekundärspulen, mit n ≥ 2, die jede eine Längen - bzw. Winkelausdehnung besitzt, und in denen unter dem elektromagnetischen Einfluss der Primärspule(n) unterschiedliche Spannungen und Ströme induziert werden, beinhaltet und dadurch gekennzeichnet dass das beeinflussende Element, mit einer geeigneten Länge, über mindestens einem Bewegungsbereich mindestens zwei Sekundärspulen in erfassbarer Weise elektromagnetisch beeinflusst und dass sich diese Beeinflussungen der betroffenen Sekundärspulen durch die Verschiebung des beeinflussenden Elements verändern, wobei ebenfalls Mittel vorgesehen sind die diese Veränderungen oder Differenzen der Beeinflussungen auswerten um entsprechende Signale und Informationen oder Daten repräsentativ der Position bzw. der Bewegung des beeinflussenden Elements und somit des Teils oder Organs zu liefern.

In den abhängigen Ansprüchen 2 bis 16 sind vorteilhafte Ausführungsformen bzw zusätzliche Merkmale der Erfindung beschrieben.

Die Erfindung betrifft auch, gemäß einer weiteren Ausbildung, eine induktive Induktive Sensoranordnung zur Erfassung der Dreh- oder Translationsposition bzw. - bewegung eines beweglichen Teils oder Organs welches ein elektomagnetische Felder beeinflussendes Element aufweist oder mit einem solchen Element starr verbunden ist, dadurch gekennzeichnet dass dieser Sensor im wesentlichen aus wenigstens einem Spulensystem besteht, welches mehrere Spule(n) mit einer Längen- oder Winkelausdehnung beinhaltet, wobei jede Primärspule Teil eines Schwingkreises ist und ein elektromagnetisches Feld erzeugt und dadurch gekennzeichnet dass das beeinflussende Element, mit einer geeigneten Länge so, über mindestens einem Bewegungsbereich Δs mindestens zwei Spulen in erfassbarer Weise elektromagnetisch beeinflusst und dass sich diese Beeinflussungen der betroffenen Spule(n) durch die Verschiebung des beeinflussenden Elements verändern, wobei ebenfalls Mittel vorgesehen sind die diese Veränderungen oder Differenzen der Beeinflussungen auswerten um entsprechende Signale und Informationen oder Daten repräsentativ der Position bzw. der Bewegung des beeinflussenden Elements und somit des Teils oder Organs zu liefern.

In der folgenden Beschreibung wird nun die Erfindung an Hand von Ausführungsbeispielen näher erläutert, dies im Zusammenhang mit den anliegenden schematischen Figuren.

Es zeigen:
Figur 1 : eine schematische Teilschnittansicht einer induktiven Sensoranordnung gemäss der Erfindung ;
Figuren 2A und 2B : eine schematische Teilansicht (2A) gemäss Figur 1 und eine Ansicht in Richtung A (2B) eines linearen Spulensystems einer Sensoranordnung gemäss einer Ausführungsform der Erfindung;
Figur 3 : eine perspektivische Ansicht eines kreiszylindrischen Spulensystems gemäss einer anderen Ausführungsform der Erfindung ;
Figuren 4A und 4B : eine Draufsicht (4A) und eine Schnittansicht nach B-B- (4B) eines planaren kreisförmigen Spulensystems gemäss einer anderen Ausführungsform der Erfindung ;
Figur 5 : eine Teilschnittansicht eines Spulensystems mit einer zusätzlichen Spule;
Figur 6 : eine Teilschnittansicht einer erfindungsmässen Sensoranordnung mit zwei Spulensystemen ;
Figur 7 : eine explodierte Ansicht eines Spulensystems gemäss der Erfindung, das in einer Leiterplattenstruktur untergebracht ist;
Figur 8 : Chronogramme der Stromsignale in der Primärspule und in zwei der Sekundärspulen des Spulensystems der Figur 7 ;
Figuren 9A und 9B: schematische Teilschnittansichten von zwei weiteren Ausführungsformen eines Spulensystems gemäss der Erfindung;
Figuren 10A und 10B: eine Teilschnittansicht (10A) eines erfindungsgemässen Spulensystems und das Diagram (10B) der Änderung des differentiellen Stromsignals in Abhängigkeit von der Stellung des beeinflussenden Elements, und,

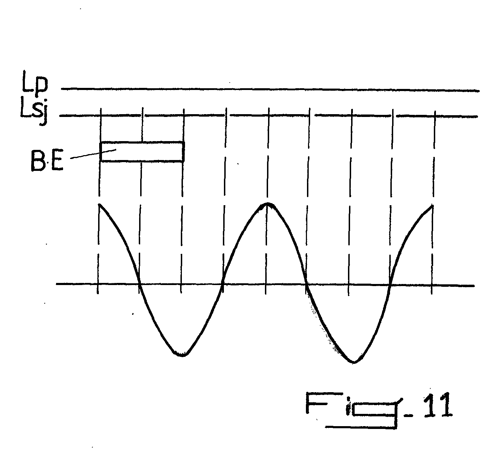

Figur 11 : eine schematische Darstellung zur Anschauung eines Beispieles eines gelieferten Signals in Abhängigkeit von der Position des beeinflussenden Elements gegenüber des dargestellten Spulensystems.

Die vorgenannten Figuren zeigen eine induktive Sensoranordnung zur Erfassung der Position, gegebenenfalls der Bewegung, eines Zylinderkolbens oder einer Kolbenstange, wie sie z.B. in Klemmgreifern und Kraftspannern vorkommen, oder zur Erfassung der Position oder des Winkels einer Ventilklappe oder eines ähnlichen drehbaren Teiles.

Diese erfindungsgemässe Sensoranordnung beinhaltet wenigstens ein Spulensystem in dem eine oder mehrere Primärspule(n) Lpi mit einer jeweiligen Längenausdehnung Si Teil eines ozillierenden Systems ist (sind) und ein elektromagnetisches Feld erzeugt(en), das in n Sekundärspulen Lsj (Ls1 bis Lsn) unterschiedliche Spannungen und Ströme induziert.

Das Teil oder Organ T dessen Position bzw Bewegung erfasst werden soll, enthält ein geeignetes elektromagnetisch beeinflussendes Element oder Bedämpfungselement BE, mit einer Länge s0 in Ausdehnungsrichtung R, welches über einen grösseren Bereich Δs mindestens zwei der Sekundärspulen Lsj, insb. deren Kopplungsfaktor mit der oder den Primärspule(n) Lpi, beeinflusst.

Die Verschiebung des Teils oder Organs T und damit des beeinflussenden Elements BE in Bewegungsrichtung bzw Ausdehnungsrichtung R des Spulensystems, verändert die Stärke und Intensität der Beeinflussung der betroffenen Sekundärspulen, da mindestens eine Spule weniger beeinflusst wird und midestens eine andere Spule mehr beeinflusst wird.

Zur Gewinnung eines der Position des beeinflussenden Elements entsprechenden Signals, kann entweder eine nachgeschaltete elektronische Vorrichtung M vorgesehen sein, die die Differenz der Beeinflussung der betroffenen Sekundärspulen durch dieses Element auswertet oder die Sekundärspulen Lsj können so geschaltet sein, dass das gelieferte resultierende Signal dieser Beeinflussungsdifferenz entspricht.

Aus diesem Signal kann dann in einfacher Weise die Position des Elements BE und somit des Teils T abgeleitet werden. Wenn die elektrische Vorrichtung M, die örtlich dem Spulensystem zugeordnet ist, geeignete Mittel beinhaltet (Recherchmittel, Speicher, usw.), können auch andere Parameter der Bewegung des Elements BE ermittelt, wie z.B. Geschwindigkeit, Beschleunigung, Richtung, usw.

Die wenigstens eine Primärspule Lpi kann Teil eines selbstozillierenden Systems sein oder durch äussere Impulse fremderregt werden um das elektromagnetische Feld zu erzeugen.

Wie dies insb. aus den Figuren 2, 6, 7, 9 und 10 hervorgeht können die Sekundärspulensätze Lsj Spulen beinhalten mit verschiedenen Ausdehnungen sj um somit in spezifischen Bereichen grössere oder geringere Auflösungen zu erreichen, der Anwendung entsprechend.

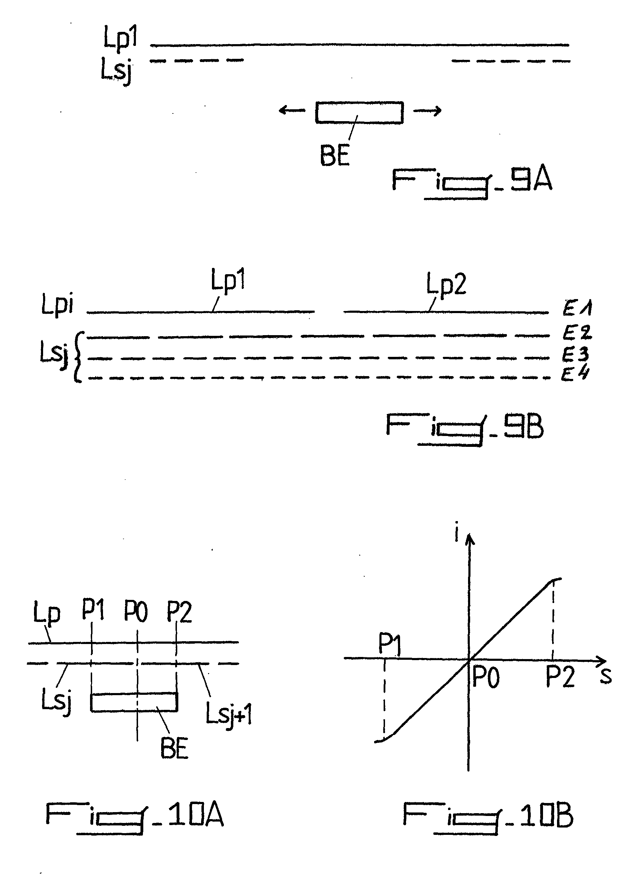

Wie dies aus der Figur 9B hervorgeht, können mehrere Spulensysteme (Lp1, Lsj-Lp2, Lsj) aneinandergereiht angeordnet sein, um gegebenenfalls ein der Applikation angepasster breiter Bereich erfasst werden kann.

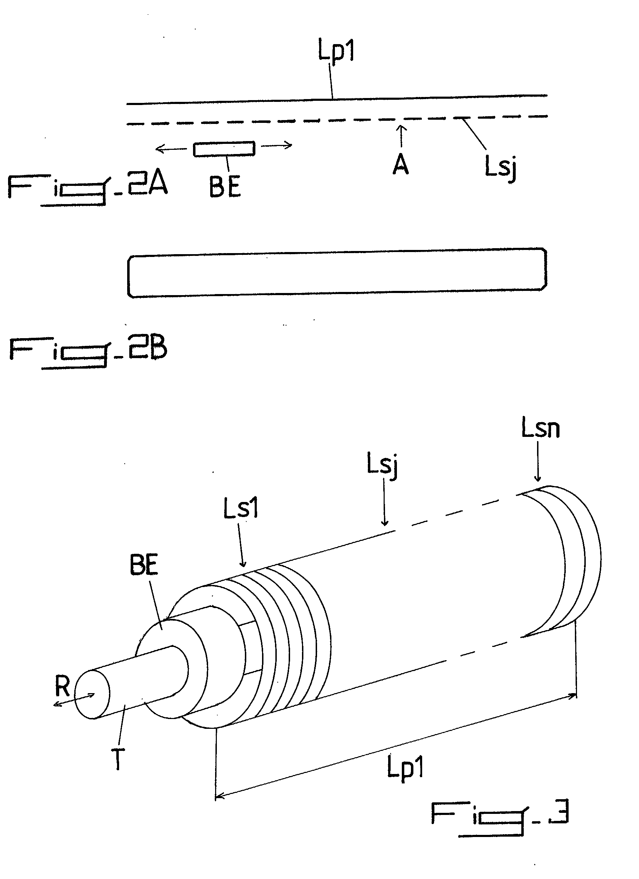

Zudem kann die generelle Form des Spulensystems Lpi, Lsj sehr unterschiedlich sein und z.B. eine lineare oder planare (siehe Figuren 2A und 2B), eine zylindrische (siehe Figur 3) oder eine scheibenartige (siehe Figuren 4A und 4B) Gestaltung aufweisen.

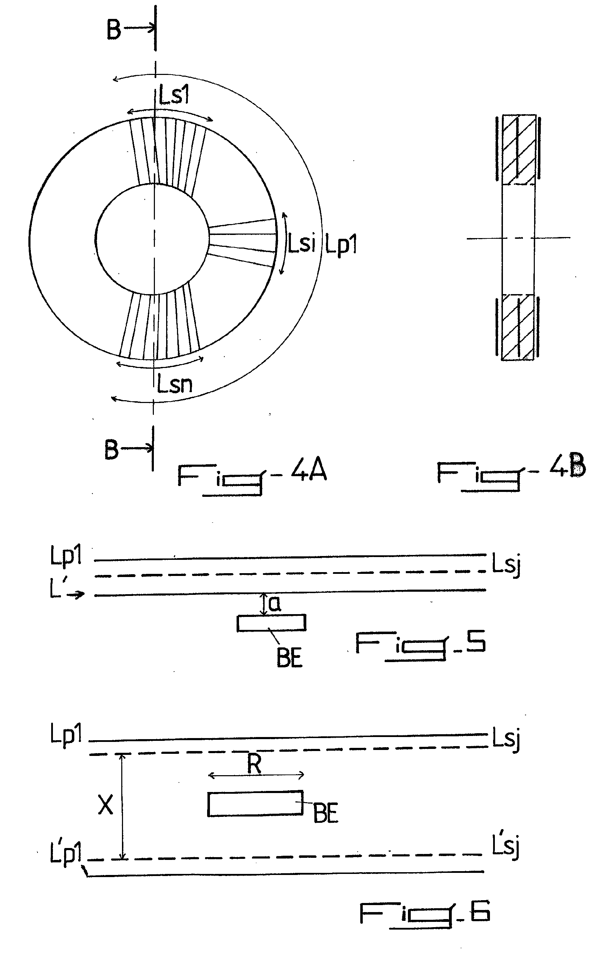

Um die Abstandsabhängigkeit des beeinflussenden Elements BE vom Spulensystem in einem Bereich Δa zu eliminieren, kann erfindungsgemäss vorgesehen werden, dass mindestens eine zusätzliche Spule L' angeordnet wird und dass die Verläufe der Sekundärspulen Ls 1 bis Lsn auf den Verlauf der zusätzlichen Spule(n) L' bezogen werden (siehe Figur 5).

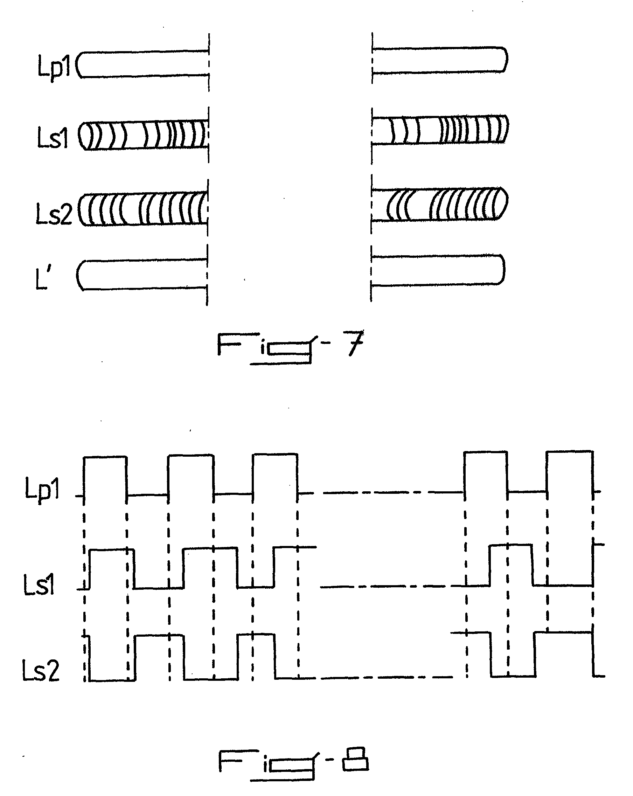

Einer besonderen Ausführungsform der Erfindung entsprechend können die verschiedenen Komponenten des Spulensystems als geeignete geometrische Anordnungen übereinanderliegend angeordnet sein (E1 bis E4), z.B. als mehrlagige Leiterplatte (siehe Figuren 7 und 8).

Im Zusammenhang mit dieser Ausführungsform kann das Spulensystem Lpi, Lsj aus parallelen Leiterbahnen bestehen, deren Abstand je nach Funktion der Anordnung (primär oder sekundär) konstant ist, oder sich entlang der Bewegungs- bzw Ausdehnungsrichtung R ändert (Digitalisierung der Position).

Wie dies aus der Figur 6 hervorgeht kann die erfindungsgemässe induktive Sensoranordnung gegebenfalls auch zwei komplette duale Spulensysteme Lpi - Lsj und L'pi-L'sj aufweisen, die in einen vorbestimmten Abstand X eines gebenüber dem andern angeordnet sind.

In diesem Fall werden die beiden Signale addiert und somit ein Gesamtsystem beschaffen, in dem die Lage des zu erfassenden Elements BE dieses duale System nur entlang der R-Achse beeinflusst und nicht entlang der X-Achse.

Die Ermittlung der Position und/oder Bewegung des beeinflussenden Elements BE geschiet z.B. im Zussamenhang mit den Ergebnissen einer vorheriger Kalibrierungs- und Parametrierungsphase der Sensoranordnung, beispielsweise durch Vergleichungs- und/oder Interpolationsschritte. Solche Ermittlungs- und Berechnungsverfahren sind dem Durchschittsfachmann bekannt.

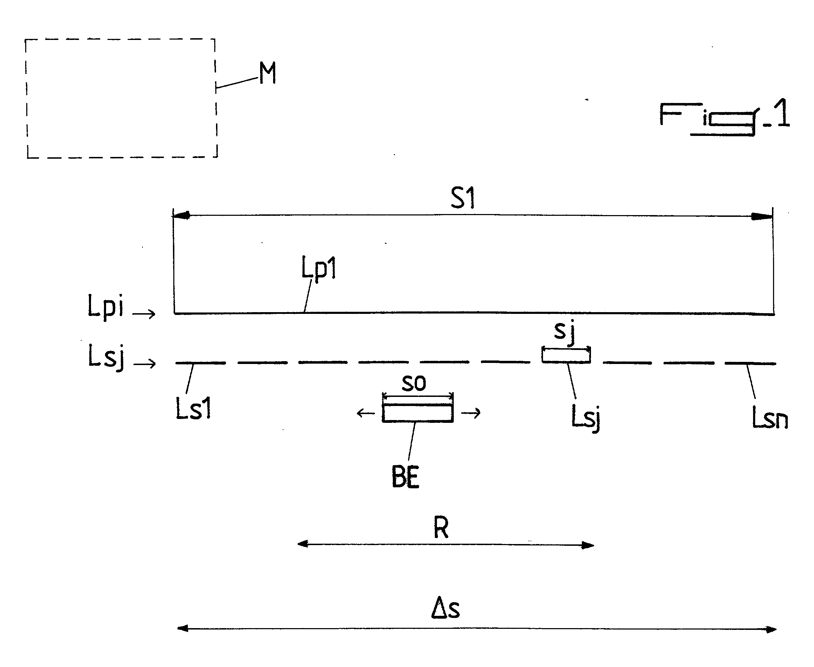

Die Wirkungsweise der erfindungsgemässen induktiven Anordnung wird nun an Hand eines Beispiels näher beschrieben, dies insb. im Zusammenhang mit den Figuren 1, 2A und 2B.

Auf diesen Figuren ist eine Primärspule Lp1 ersichtlich (es können auch mehrere Primärspulen Lp1 bis Lpn sein), die sich mit einer gesamt Ausdehnung S1 entlang einer Ausdehnungsrichtung R erstreckt. Dieses Primärspule Lp1 ist Teil eines Oszillators oder wird durch Impulse fremderregt.

Zusätzlich sind neben der Primärspule, längs der Ausdehnung R zwei oder mehrere Sekundärspulen (Ls1...Lsn) aneinandergereiht angeordenet, die wie Sekundärwicklungen eines Transformators wirken, mit örtlich verteiltem Kopplungsfaktor.

Die Ausdehnung s1 ist grösser oder gleich dem Hub oder der Bewegung allgemein, des zu erfassenden Zylinders, Teils oder Organs.

Die induzierte Spannungen oder Ströme in Ls1 bis Lsn werden durch das Element BE derart beeinflusst, dass sich der Kopplungsfaktor verschiebt. Steht das BE genau zwischen zwei Sekundärspulen, wirkt auf beide derselbe Einfluss und die Differenz wird gleich null.

Ausserhalb dieses Ortes des Gleichgewichts verschiebt sich die Differenez der induzierten Signale, wie dies im Zusammenhang mit den Figuren 10A und 10B zu verstehen ist.

Das Maximum oder Minimum wird erreicht, wenn das BE die Ausdehnung einer Sekundärwicklung besitzt und nur eine Sekundärwicklung Lsi beeinflusst.

Reiht man mehrere Sekundärspulen aneinander, kann der Erfassungsbereich vergrössert und codiert werden, ohne das Element BE zu verlängern.

Andererseits können die Sekundärwicklungen Lsj auch auf Teilbereiche des Hubs reduziert und konzentriert werden, um die Auflösung zu erhöhen und den Aufwand zu reduzieren (siehe hierzu Figur 9A).

Durch Reihen von Sekundärwicklungen Lsj können inkrementale oder multiplex-Systeme entstehen.

Das beschriebene Spulensystem stellt, wenn auch viele Sekundärwicklungen in Reihe angeordnet sind, ein System aus zwei Ebenen dar, nämlich eine Primärebene mit einer oder mehreren aneinandergereihten Primärspulen und eine Sekundärebene mit zwei oder mehreren aneinanderen Sekundärspulen.

Durch Einführung zusätzlicher Ebenen (E1 bis E4) kann eine stufenweise Erhöhung der Auflösung und damit der Genauigkeit oder eune Codierung durchgeführt werden (siehe hierzu z.B. Figur 9B).

In der Figur 7 ist ein besonders geeignetes und vorteilhaftes Spulensystem aufgezeichnet.

In dieser Ausführungsform sind Sekundärspulen vorhanden deren Induktivität sich entlang der Ausdehnung einer gegebenen Sekundärwicklung ändert, und die gegeneinander angeordnete Sekundärwicklungn besitzen, welche die gesuchte ortsabhängige Grösse zeigen.

Der Fachmann wird bemerken, dass das vorgeschlagene Spulensystem unabhängig davon ist, ob man Primär- und Sekundärwindungen vertauscht, da die Sensoranordnung in beiden Konfigurationen funktionsfähig ist.

Zudem wird es für Ihn auch naheliegend sein, dass die Sensoranordnung sowohl mit einem einfachen Spulensystem, als auch mit einem dualen Spulensystem denkbar ist.

Es kann somit ebenfalls vorgesehen werden, im Zusammenhang mit der vorher angegebenen weiteren Ausbildung, daß keine Sekundärspulen vorhanden sind, sondern nur Primärspulen Lpi.

In diesem Falle (nicht abgebildet), werden die Auswertungsmittel M das Schwingverhalten der in bevorzugter Weise fremderregten Spulen Lpi auswerten.

Ein Beispiel einer solcher Auswertung wird z.B. in der europäischen Patentanmeldung Nr. 01440262.2 vom 13. August 2001, dessen Inhalt und Lehre in dieser Anmeldung aufgenommen wird.

Selbstverständlich ist die Erfindung nicht auf die beschriebenen und dargestellten Ausführungsformen begrenzt. Änderungen, z. B. in den Ausführungformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Induktive Sensoranordnung zur Erfassung der Dreh- oder Translationsposition bzw. - bewegung eines beweglichen Teils oder Organs welches ein elektomagnetische Felder beeinflussendes Element aufweist oder mit einem solchen Element starr verbunden ist, **dadurch gekennzeichnet dass** dieser Sensor im wesentlichen aus wenigstens einem Spulensystem besteht, welches, zum einen, eine oder mehrere Primärespule(n) (Lpi) mit einer Längen- oder Winkelausdehnung (Si), wobei jede Primärspule (Lpi) Teil eines Schwingkreises ist und ein elektromagnetisches Feld erzeugt und, zum anderen, mindestens ein Satz von n Sekundärspulen (Lsj), mit n ≥ 2, die jede eine Längen - bzw. Winkelausdehnung (sj) besitzt, und in denen unter dem elektromagnetischen Einfluss der Primärspule(n) (Lpi) unterschiedliche Spannungen und Ströme induziert werden, beinhaltet und **dadurch gekennzeichnet dass** das beeinflussende Element (BE), mit einer geeigneten Länge (so), über mindestens einem Bewegungsbereich (Δs) mindestens zwei Sekundärspulen (Lsj) in erfassbarer Weise elektromagnetisch beeinflusst und dass sich diese Beeinflussungen der betroffenen Sekundärspulen durch die Verschiebung des beeinflussenden Elements (BE) verändern, wobei ebenfalls Mittel (M) vorgesehen sind die diese Veränderungen oder Differenzen der Beeinflussungen auswerten um entsprechende Signale und Informationen oder Daten repräsentativ der Position bzw. der Bewegung des beeinflussenden Elements (BE) und somit des Teils oder Organs zu liefern.

2. Induktive Sensoranordnung gemäss Anspruch 1, **dadurch gekennzeichnet dass** die Mittel zur Auswertung der Veränderungen oder Differenzen der Beeinflussungen der betroffenen Sekundärspulen (Lsj) aus eine die Spannungs- bzw. Stromsignale der Sekundärspulen (Sj) auswertende elektronische Vorrichtung bestehen, welche Vorrichtung in der Sensoranordnung beinhaltet oder der Sensoranordnung nachgeschaltet ist und die Differenz der Beeinflussung mindestens zweier Sekundärspulen (Lsj) durch das beeinflussende Element (BE) auswertet.

3. Induktive Sensoranordnung gemäss Anspruch 1, **dadurch gekennzeichnet dass** die Mittel zur Auswertung der Veränderungen oder Differenzen der Beeinflussungen der betroffenen Sekundärspulen (Lsj) aus einer vorbestimmten Schaltungsanordnung der Anschlüsse dieser Spulen (Lsj) bestehen, welche Anordnung ein resultirendes Signal das der Veränderungen bzw. der Differenzen dieser Beeinflussungen entspricht liefert.

4. Induktive Sensoranordnung gemäss einem der Anspüche 1 bis 3, **dadurch gekennzeichnet dass** das elektromagnetische Feld der order jeder der Primärspule(n) (Lpi) durch fremderregte Impulse erzeugt wird.

5. Induktive Sensoranordnung gemäss einem der Ansprüche 1 bis 3, **dadurch gekennezeichnet dass** die oder jede der Primärspule(n) (Lpi) Teil eines selbstozillierenden Systems ist.

6. Induktive Sensoranordnung gemäss einem der Ansprüche 1 bis 5, **dadurch gekennzeichnet dass** der Ausdehnungs- bzw. Bewegungsrichtung (R) entlang mehrere Sekundärspulensätze (Lsj) angeordnet sind, in kontinuierlicher aneinendergereihter Weise oder in diskontinuierlicher Weise, als separate untereinander getrennten Sätze.

7. Induktive Sensoranordnung gemäss einem der Ansprüche 1 bis 6, **dadurch gekennzeichnet dass** entlang der Ausdehmungs- bzw. Bewegungsrichtung (R) die verschiedenen Sekundärspulen (Lsj) wenigstens zum Teil verschiedene Ausdehnungen haben, entsprechend Bereichen mit grösserer oder geringerer Auflösung.

8. Induktive Sensoranordnung gemäss einem der Ansprüche 1 bis 7, **dadurch gekennzeichnet dass** das Spulensystem eine zylindrische Form aufweist, z.B. mit kreisförmigen Windungen.

9. Induktive Sensoranordnung gemäss einem der Ansprüche 1 bis 7, **dadurch gekennzeichnet dass** das Spulensystem eine lineare Form aufweist.

10. Induktive Sensoranordnung gemäss einem der Ansprüche 1 bis 7, **dadurch gekennzeichnet dass**, wenn das beeinflussenden Element (BE) eine Kreisbewegung beschreibt, das Spulensystem kreisförmig ausgelegt ist und die Leiterbahnen der Spulen radial oder stahlenförmig verlaufen.

11. Induktive Sensoranordnung gemäss einem der Ansprüche 1 bis 10, **dadurch gekennzeichnet dass** wenigstens eine zusätzliche Spulen (L') vorgesehen ist welche sich auf einer anderen Fläche befindet als die Flächen die den Primär- und Sekundärspulen entsprechen.

12. Induktive Sensoranordnung gemäss einem der Ansprüche 1 bis 10, **dadurch gekennzeichnet dass** wenigstens ein zusätzliches Spulensystem (L'pi, L'sj) vorgesehen ist, welches in einem vorbestimmten Abstand von einem ersten Spulensystem (Lpi, Lsj) angeordnet ist, wobei die gelieferten Signale, Informationen oder Daten beider Spulensysteme in kombinierter Weise, z.B. durch Addierung oder Korrelierung, ausgewertet werden.

13. Induktive Sensoranordnung gemäss einem der Ansprüche 1 bis 7 und 9 bis 12, **dadurch gekennezeichnet dass** die verschiedenen Primärund Sekundärspulensätze übereinander angeordent sind, z.B. in einer mehrlagigen Leiterplattenstruktur.

14. Induktive Sensoranordnung gemäss einem der Ansprüche 1 bis 7 und 9 bis 13, **dadurch gekenzeichnet dass** jedes Spulensystem oder - satz aus parallelen Leiterbahnen besteht, deren Abstand je nach Funktion des entsprechenden Satzes, nämlich Primärspule(n) oder Sekundärspulen, entweder konstant bleibt oder sich entlang der Ausdehnungsrichtung (R) ändert.

15. Induktive Sensoranordnung gemäss einem der Ansprüche 1 bis 14, **dadurch gekennzeichnet dass** mehrere Sekundärspulensätze (Lsj) vorhanden sind, die auf verschiedenen flachen oder zylindrischen Ebenen angeordnet sind.

16. Induktive Sensoranordnung gemäß einem der Ansprüche 14 und 15, **dadurch gekennzeichnet, daß** die Komponenten des wenigstens einen Spulensystems derartig beschaffen und angeordnet sind, daß sie eine digitale Auflösung erlauben.

17. Induktive Sensoranordnung zur Erfassung der Dreh- oder Translationsposition bzw. - bewegung eines beweglichen Teils oder Organs welches ein elektomagnetische Felder beeinflussendes Element aufweist oder mit einem solchen Element starr verbunden ist, **dadurch gekennzeichnet dass** dieser Sensor im wesentlichen aus wenigstens einem Spulensystem besteht, welches mehrere Spule(n) (Lpi) mit einer Längenoder Winkelausdehnung (Si) beinhaltet, wobei jede Primärspule (Lpi) Teil eines Schwingkreises ist und ein elektromagnetisches Feld erzeugt und **dadurch gekennzeichnet dass** das beeinflussende Element (BE), mit einer geeigneten Länge (so), über mindestens einem Bewegungsbereich (Δs) mindestens zwei Spulen (Lpi) in erfassbarer Weise elektromagnetisch beeinflusst und dass sich diese Beeinflussungen der betroffenen Spule(n) durch die Verschiebung des beeinflussenden Elements (BE) verändern, wobei ebenfalls Mittel (M) vorgesehen sind die diese Veränderungen oder Differenzen der Beeinflussungen auswerten um entsprechende Signale und Informationen oder Daten repräsentativ der Position bzw. der Bewegung des beeinflussenden Elements (BE) und somit des Teils oder Organs zu liefern.

18. Induktive Sensoranordnung gemäß Anspruch 17, **dadurch gekennzeichnet, daß** die Auswertungsmittel (M) das Schwingverhalten der in bevorzugter Weise fremderregten Spulen (Lpi) auswerten.
